# EUROPEAN PATENT APPLICATION

(11) **EP 3 280 121 A1**
(43) Date of publication of application: **07.02.2018**
(21) Application number: 17184253.7
(22) Date of filing: 01.08.2017
(51) Int. Cl.: H04M 1/22, H04M 1/725

(54) **METHOD AND DEVICE FOR DETERMINING USER RELATIONSHIP**

(30) Priority: 05.08.2016 HK 16109349
(71) Applicant: Light Up Technology Group Limited, Kwai Chung (HK)
(72) Inventor: Chang, Kai Shing, Kwai Chung (HK)
(74) Representative: Bridle, Andrew Barry

(57) **Abstract**

The present invention relates to a control method for screens and flashlights of multiple mobile phones. The method comprises: transmitting, by an APP server, control information to a cloud information push server; afterwards, pushing the control information into mobile phones with an application; after receiving, by the mobile phones, the control information, acquiring activity information of an activity to be attended, and transmitting the information to the push server; after receiving, by the server, the activity information, acknowledging; on the day of the activity, and pushing, by the push server, information to users of the multiple mobile phones to remind the multiple users to open the application, and constantly synchronizing, by the mobile phones, data with the server in the background to control the screens of the mobile phones to display and play images and animation specified by the activity. By means of the above-mentioned solution, smart phones in which different systems are installed can acquire information of different activities in advance, the server then receives contents displayed on the screens, so that the multiple different mobile phones can play and display different images, audios and videos simultaneously, and thereby the playability and interestingness of the smart phones are increased.

## Description

### Technical Field

The present invention relates to a control method for screens and flashlights of multiple mobile phones, and in particular to a display method for controlling screens of various smart phones with different systems by transmitting information via the cloud for various activities.

### Background Art

Because of the modernization pace of life styles, smart phones have stepped into the lives of people on a large scale. Various existing applications installed in the mobile phones mainly rely on information push, and there haven't been related programs yet to control an enormous number of mobile phones, give different colors, light and shadow, i.e. images, and then generate different styles of patterns.

For example, a Chinese patent CN103365441 B discloses a method for remotely controlling the desktop of an Android mobile phone on a computer side, which includes the following steps: step 1, transmitting, by a computer side, a screen event injection instruction to an Android mobile phone; step 2, judging, by the Android mobile phone, whether there is basic mobile phone screen information in a current memory, if so, executing step 5, and if not, executing step 3; step 3, acquiring mobile phone screen device information of the Android mobile phone; step 4, parsing the mobile phone screen device information to obtain the basic mobile phone screen information; step 5, converting screen coordinates of a control point into actual physical code coordinates capable of being recognized by the screen of the Android mobile phone; step 6, creating a compound command according to a screen type, switching on the Android mobile phone screen device according to a screen device number, injecting a screen event into the Android mobile phone via the compound command, and thereby realizing the remote control of the desktop of the Android mobile phone on the computer side. Apparently, the method still carries on controlling on a single mobile phone, but, for the simultaneous control of screens of multiple mobile phones, the method is apparently incapable.

Therefore, it is necessary to improve the prior art and provide a novel control method in order to simultaneously control the display of screens of multiple mobile phones.

### Summary of the Invention

The objective of the present invention is to solve the above-mentioned problem in the prior art and provide a novel control method for screens and flashlights of mobile phones, which can simultaneously control screens of multiple mobile phones and can also display different colors and images on the screens of the multiple mobile phones, thus greatly improving the playability of smart phones.

Therefore, the technical solution of the present invention which is provided for the above-mentioned objective is a control method for screens and flashlights of multiple mobile phones, which includes:
transmitting, by an APP server, control information to a cloud information push server;
pushing, by the cloud information push server, the control information into multiple to-be-controlled mobile phones with an application APP;
after receiving, by the multiple mobile phones, the control information, reminding users to open the application APP, acquiring, by the mobile phones, activity information of an activity to be attended, and transmitting the information to the cloud information push server;
after receiving, by the cloud information push server, the activity information, acknowledging the activity information, and receiving server information in real time in order to control the screens and flashlights of the mobile phones; and
within a scheduled time on the day of the activity, pushing, by the cloud information push server, information to the users of the multiple mobile phones to remind the multiple users to open the application APP in order to control the screens of the mobile phones to display and play images and animation specified by the activity and control flashlights.

According to the control method for screens and flashlights of multiple mobile phones in the present invention, the mobile phones will constantly synchronize data with the server in the background in order to keep the time of every mobile phone in consistence.

According to the control method for screens and flashlights of multiple mobile phones in the present invention, the application APP is programmed to control the flashing frequency and flashing rhythm of the flashlights of the mobile phones in order to obtain different images.

According to one embodiment of the control method for screens and flashlights of multiple mobile phones in the present invention, the activity information includes an activity date, an activity place and seat information.

According to one embodiment of the control method for screens and flashlights of multiple mobile phones in the present invention, the cloud information push server can be a push notification server with an IOS system or a Google cloud information server with an Android system. According to one embodiment of the control method for screens and flashlights of multiple mobile phones in the present invention, the mobile phones acquiring activity information of an activity to be attended is the mobile phones scanning two-dimensional codes of activity tickets.

According to one embodiment of the control method for screens and flashlights of multiple mobile phones in the present invention, the application APP runs in the background of the mobile phone system in order to ensure that all the mobile phones can receive the latest information and data. According to one embodiment of the control method for screens and flashlights of multiple mobile phones in the present invention, the played data include specific images and colors in order to combinatively play the combination of the different colored images and colors.

By means of the above-mentioned improved technical solution, by the method of information push, the corresponding application APP can be installed in advance in the smart phones in which different systems (such as an IOS system or an Android system) are installed, so that information of different activities can be acquired, contents displayed on the screens are then received via information pushed by the server, the mobile phones will constantly synchronize data with the server in the background, and thereby the multiple different mobile phones can play and display images, audios and videos at the same time. The method can control the screen display of the multiple different mobile phones at the same time, thus increasing the playability and interestingness of the smart phones.

### Brief Description of the Drawings

In reference to the drawings, the further objective, characteristics, features and advantages of the present invention are described in more detail according to embodiments.

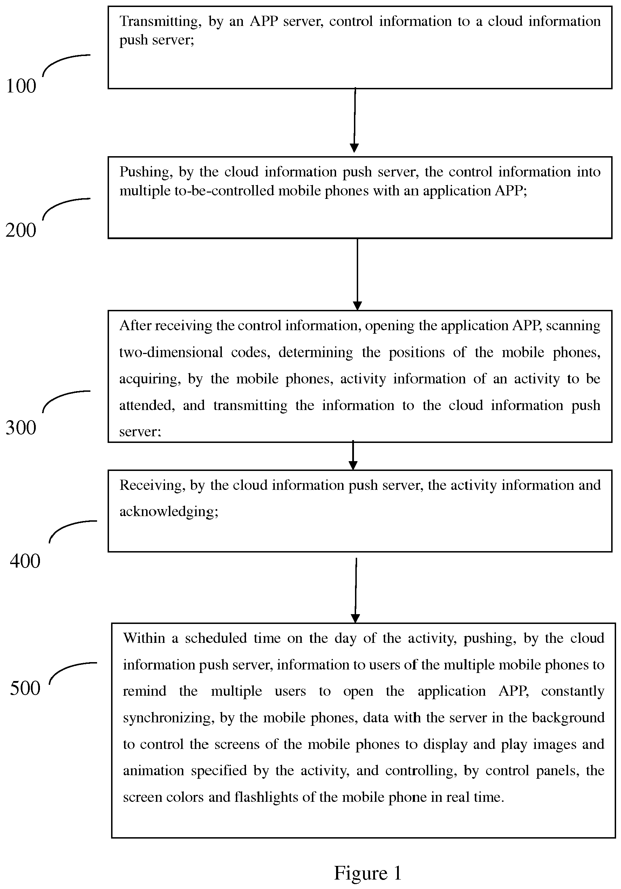

Fig. 1 shows a block diagram of a control method for screens and flashlights of multiple mobile phones according to one embodiment of the present invention.

### Detailed Description of the Invention

A control method for screens and flashlights of multiple mobile phones according to the present invention shown in Fig. 1 includes the following steps:
100, transmitting, by an APP server, control information to a cloud information push server;
200, pushing, by the cloud information push server, the control information into multiple to-be-controlled mobile phones with an application APP;
300, after receiving, by the multiple mobile phones, the control information, reminding users to open the application APP, acquiring activity information of an activity to be attended by the mobile phones, and transmitting the information to the cloud information push server;
400, after receiving, by the cloud information push server, the activity information, acknowledging the activity information; and
500, within a scheduled time on the day of the activity, pushing, by the cloud information push server, information to the users of the multiple mobile phones to remind the multiple users to open the application APP, and constantly synchronizing data by the mobile phones with the server in the background in order to control the screens of the mobile phones to display and play images and animation specified by the activity.

In step 300, after receiving, by the multiple mobile phones, the control information, the mobile phone users will read the pushed information, and according to the reminding of the information, the users will then open the application APP by themselves; at this point, if the users have tickets or other admission documents for participating the activity, the users can use the mobile phones to scan information, such as bar codes or two-dimensional codes, on the tickets or other admission documents to read information in the bar codes or the two-dimensional codes, acquiring specific activity information of the activity to be attended, and the users then transmit this specific information to the cloud information push server. Specifically, according to one embodiment of the control method for screens and flashlights of multiple mobile phones in the present invention, the activity information includes an activity date, an activity place and seat information.

Further, according to step 400, after receiving the specific activity information, the cloud information push server will compare and acknowledge according to preset information. When the activity starts, the mobile phones will constantly synchronize data with the server in the background, so that the synchronized screens of the mobile phones of the multiple users can be switched on at the same time.

After the step of acknowledging and judging the information is complete, in step 500, on the day of the activity, the cloud information push server will continue to push information to the users of the multiple mobile phones to remind the users of the multiple mobile phones to open the application APP, the mobile phones will then constantly synchronize data with the server in the background, the mobile phones of the users will control the screens of the mobile phones to display and play images and animation specified by the activity, that is, the images and animation specified by the activity will be played on the screens of the mobile phones, and thereby interestingness is increased. In order for the users of the mobile phones to obtain the latest information and data, the application APP runs in the background of the mobile phones, i.e. running in a background mode, so that the latest pushed information can be discovered by the users of the mobile phones in time.

Further, according to one embodiment of the control method for screens and flashlights of multiple mobile phones in the present invention, the application APP can also be programmed, so that the application APP can control the flashing frequency and flashing rhythm of the flashlights of the mobile phones in order to obtain different images. Thus, even in a daytime activity, rich image display can be obtained.

According to one embodiment of the control method for screens and flashlights of multiple mobile phones in the present invention, the played data include specific images and colors in order to combinatively play the combination of the different colored images and colors.

By means of the above-mentioned improved technical solution, by the method of information push, the corresponding application APP can be installed in advance in the smart phones in which different systems (such as an IOS system or an Android system) are installed, so that information of different activities can be acquired, contents displayed on the screens are then received via information pushed by the server, the mobile phones will constantly synchronize data with the server in the background, and thereby the multiple different mobile phones can play and display different images, audios and videos at the same time. In addition, the method can control the screen display of the multiple different mobile phones at the same time, thus increasing the playability and interestingness of the smart phones.

The preferred embodiments of the present invention have been described in detail in reference to the drawings. Although those skilled in the art will understand, for the sake of clarity, some features which are not particularly important for the understanding of the present invention may not described or shown in the drawings.

In addition, it should also be understood that the method described in the present application is not limited to the above-mentioned specific embodiments, and moreover, those skilled in the art can make various alterations and modifications on the specific embodiments without departing from the instruction or scope of the present application. For example, within the scope of the present application which should fall within the scope of the present invention, the steps, elements and/or features of various exemplary or descriptive embodiments can be combined together and/or replaced by one another.

## Claims

1. A control method for screens and flashlights of multiple mobile phones, comprising:
transmitting, by an APP server, control information to a cloud information push server;
pushing, by the cloud information push server, the control information into multiple to-be-controlled mobile phones with an application APP;
after receiving, by the multiple mobile phones, the control information, reminding users to open the application APP, acquiring, by the mobile phones, activity information of an activity to be attended, and transmitting the information to the cloud information push server;
after receiving, by the cloud information push server, the activity information, acknowledging the activity information; and
within a scheduled time on the day of the activity, pushing, by the cloud information push server, information to the users of the multiple mobile phones to remind the multiple users to open the application APP in order to control the screens of the mobile phones to display and play images and animation specified by the activity and control flashlights.

2. The control method for screens and flashlights of multiple mobile phones according to claim 1, **characterized in that** the method comprises synchronizing the multiple mobile phones and the server to control the flashlights by push in real time.

3. The control method for screens and flashlights of multiple mobile phones according to claim 1, **characterized in that** the application APP is programmed to control the flashing frequency and flashing rhythm of the flashlights of the mobile phones in order to obtain different images.

4. The control method for screens and flashlights of multiple mobile phones according to claim 1, **characterized in that** the activity information comprises an activity date, an activity place and seat information.

5. The control method for screens and flashlights of multiple mobile phones according to claim 1, **characterized in that** the cloud information push server can be a push notification server with an IOS system or a Google cloud information server with an Android system.

6. The control method for screens and flashlights of multiple mobile phones according to claim 1, **characterized in that** the mobile phones acquiring activity information of an activity to be attended is the mobile phones scanning two-dimensional codes of activity tickets.

7. The control method for screens and flashlights of multiple mobile phones according to claim 2, **characterized in that** the application APP runs in the background of the mobile phone system in order to ensure that all the mobile phones can receive the latest information and data.

8. The control method for screens and flashlights of multiple mobile phones according to claim 2, **characterized in that** the played data comprise specific images and colors in order to combinatively play the combination of the different colored images and colors.
